# EUROPÄISCHE PATENTANMELDUNG

(11) **EP 2 884 771 A1**
(43) Veröffentlichungstag der Anmeldung: **17.06.2015**
(21) Anmeldenummer: 14196075.7
(22) Anmeldetag: 03.12.2014
(51) Int. Cl.: H04R 25/00, H04R 1/10, F16B 21/16, F16L 21/08, H01R 13/639, F16B 1/00, H01R 13/502

(54) **HdO-Hörinstrument mit Gehäuse und Traghaken**

(30) Priorität: 10.12.2013 DE 102013225429
(71) Anmelder: Siemens Medical Instruments Pte. Ltd., Singapore 139959 (SG)
(72) Erfinder: Lee, Chuan Foong, 81000 Johor (MY)
(74) Vertreter: FDST Patentanwälte

(57) **Zusammenfassung**

Hörinstrument zum Tragen hinter dem Ohr (HdO) mit einer Steckverbindung zwischen Gehäuse 5 und Traghaken 1. Der Erfindung liegt die Aufgabe zugrunde, eine schlank bauende, je nach Wunsch rotierbare, benutzungsfreundliche, unaufwändige und kostengünstig herzustellende und zu installierende Verbindung von Traghaken und Gehäuse eines HDO-Hörinstruments anzugeben. Ein Grundgedanke der Erfindung besteht darin, dass der Traghaken 1 und das Gehäuse 5 durch eine Steckverbindung miteinander verbunden sind, wobei ein Clip 2 dazu vorgesehen ist, die Steckverbindung zu fixieren, wobei jeweils am Traghaken und im Gehäuse Nuten 20, 22 vorgesehen sind, die dazu ausgebildet sind, den Clip 2 aufzunehmen. Die jeweiligen Nuten sind nichtparallel zur Steckrichtung der Steckverbindung orientiert und so angeordnet, dass sie bei vollständig ineinandergestecktem Traghaken und Gehäuse miteinander fluchten, und wobei der Clip in die jeweiligen Nuten gleichzeitig eingeführt ist. Durch den Clip wird die Steckverbindung zwischen Traghaken und Gehäuse fixiert, so dass vorteilhafterweise eine aufwändigere oder mehr Raum beanspruchende Fixierung, beispielsweise eine Schraubfixierung, vermieden ist. Zusätzlich ermöglicht die Fixierung mittels Clip und Nuten auch einen freier wählbaren Rotationswinkel zwischen Traghaken und Gehäuse; falls gewünscht können die Nuten so gestaltet sein, dass entweder keine, oder eine begrenzte, oder eine unbegrenzte Rotation des fixierten Traghakens ermöglicht ist.

## Beschreibung

Die Erfindung betrifft ein Hörinstrument zum Tragen hinter dem Ohr (HdO) mit einer Steckverbindung zwischen Gehäuse und Traghaken sowie ein Gehäuse und einen Traghaken eines solchen Hörinstruments.

Hörinstrumente können beispielsweise als Hörgeräte ausgeführt sein. Ein Hörgerät dient der Versorgung einer hörgeschädigten Person mit akustischen Umgebungssignalen, die zur Kompensation bzw. Therapie der jeweiligen Hörschädigung verarbeitet und verstärkt sind. Es besteht prinzipiell aus einem oder mehreren Eingangswandlern, aus einer Signalverarbeitungseinrichtung, einer Verstärkungseinrichtung, und aus einem Ausgangswandler. Der Eingangswandler ist in der Regel ein Schallempfänger, z.B. ein Mikrofon, und/oder ein elektromagnetischer Empfänger, z.B. eine Induktionsspule. Der Ausgangswandler ist in der Regel als elektroakustischer Wandler, z. B. Miniaturlautsprecher, oder als elektromechanischer Wandler, z. B. Knochenleitungshörer, realisiert. Er wird auch als Hörer oder Receiver bezeichnet. Der Ausgangswandler erzeugt Ausgangssignale, die zum Gehör des Patienten geleitet werden und beim Patienten eine Hörwahrnehmung erzeugen sollen. Der Verstärker ist in der Regel in die Signalverarbeitungseinrichtung integriert. Die Stromversorgung des Hörgeräts erfolgt durch eine ins Hörgerätegehäuse integrierte Batterie. Die wesentlichen Komponenten eines Hörgeräts sind in der Regel auf einer gedruckten Leiterplatine als Schaltungsträger angeordnet bzw. damit verbunden.

Hörinstrumente können außer als Hörgeräte auch als sogenannte Tinnitus-Masker ausgeführt sein. Tinnitus-Masker werden zur Therapie von Tinnitus-Patienten eingesetzt. Sie erzeugen von der jeweiligen Hörbeeinträchtigung und je nach Wirkprinzip auch von Umgebungsgeräuschen abhängige akustische Ausgangssignale, die zur Verringerung der Wahrnehmung störender Tinnitus- oder sonstiger Ohrgeräusche beitragen können.

Hörinstrumente können weiter auch als Telefone, Handys, Headsets, Kopfhörer, MP3-Player oder sonstige Telekommunikations- oder Unterhaltungselektronik-Systeme ausgeführt sein.

Im Folgenden sollen unter dem Begriff Hörinstrument sowohl Hörgeräte, als auch Tinnitus-Masker, vergleichbare derartige Geräte, sowie Telekommunikations- und Unterhaltungselektronik-Systeme verstanden werden.

Hörinstrumente, insbesondere Hörgeräte, sind in verschiedenen grundlegenden Typen bekannt. Bei ITE-Hörgeräten (In-the-Ear, auch IDO bzw. In-dem-Ohr) wird ein Gehäuse, das sämtliche funktionalen Komponenten einschließlich Mikrophon und Receiver enthält, mindestens teilweise im Gehörgang getragen. CIC-Hörgeräte (Completely-in-Canal) sind den ITE-Hörgeräten ähnlich, werden jedoch vollständig im Gehörgang getragen. Bei BTE-Hörgeräten (Behind-the-Ear, auch Hinter-dem-Ohr bzw. HDO) wird ein Gehäuse mit Komponenten wie Batterie und Signalverarbeitungseinrichtung hinter dem Ohr getragen und ein flexibler Schallschlauch, auch als Tube bezeichnet, leitet die akustischen Ausgangssignale eines Receivers vom Gehäuse zum Gehörgang, wo häufig ein Ohrstück am Tube zur zuverlässigen Positionierung des Tube-Endes im Gehörgang vorgesehen ist. RIC-BTE-Hörgeräte (Receiver-in-Canal Behind-the-Ear) gleichen den BTE-Hörgeräten, jedoch wird der Receiver im Gehörgang getragen und statt eines Schallschlauchs leitet ein flexibler Hörerschlauch elektrische Signale anstelle akustischer Signale zum Receiver, welcher vorne am Hörerschlauch angebracht ist, meist in einem der zuverlässigen Positionierung im Gehörgang dienenden Ohrstück. RIC-BTE-Hörgeräte werden häufig als sogenannte Open-Fit Geräte eingesetzt, bei denen zur Reduzierung des störenden Okklusions-Effekts der Gehörgang für den Durchtritt von Schall und Luft offen bleibt.

Allen Hörgerät-Typen ist gemein, dass möglichst kleine Gehäuse bzw. Bauformen angestrebt werden, um den Tragekomfort zu erhöhen, gegebenenfalls die Implantierbarkeit zu verbessern und gegebenenfalls die Sichtbarkeit des Hörgeräts aus kosmetischen Gründen zu reduzieren. Das Bestreben einer möglichst kleinen Bauform gilt ebenso für die meisten anderen Hörinstrumente.

Es ist bekannt, BTE- bzw. HDO-Hörinstrumenten aus einem hinter dem Ohr zu tragenden Gehäuse und einem davon getrennten Traghaken, auch als Earhook bezeichnet, zusammenzusetzen. Traghaken und Gehäuse können beispielsweise durch eine Schraub-, Schnapp- oder Steckverbindung verbunden sein. Die gegenseitige Verbindung muss einerseits mechanisch ausreichend stabil sein, um sich im Alltagsgebrauch nicht unbeabsichtigt zu lösen. Zudem sollte die Verbindung den Tragekomfort nicht beeinträchtigen und optisch unauffällig sein. Häufig wird auch eine hinreichend leichte Lösbarkeit der Verbindung zu Wartungs- und Anpassungs-Zwecken gewünscht.

Der Erfindung liegt die Aufgabe zugrunde, eine schlank bauende, je nach Wunsch rotierbare, benutzungsfreundliche, unaufwändige und kostengünstig herzustellende und zu installierende Verbindung von Traghaken und Gehäuse eines HDO-Hörinstruments anzugeben.

Die Erfindung löst diese Aufgabe durch ein Hörinstrument, ein Gehäuse sowie einen Traghaken mit den Merkmalen der unabhängigen Patentansprüche.

Ein Grundgedanke der Erfindung besteht in einem Hörinstrument zum Tragen hinter dem Ohr (HDO) umfassend ein Gehäuse und einen Traghaken, wobei der Traghaken und das Gehäuse durch eine Steckverbindung miteinander verbunden sind, wobei ein Clip dazu vorgesehen ist, die Steckverbindung zu fixieren, wobei jeweils am Traghaken und im Gehäuse Nuten vorgesehen sind, die dazu ausgebildet sind, den Clip aufzunehmen, wobei die jeweiligen Nuten nicht-parallel zur Steckrichtung der Steckverbindung orientiert und so angeordnet sind, dass sie bei vollständig ineinandergestecktem Traghaken und Gehäuse miteinander fluchten, und wobei der Clip in die jeweiligen Nuten gleichzeitig eingeführt ist. Durch den Clip wird die Steckverbindung zwischen Traghaken und Gehäuse fixiert, so dass vorteilhafterweise eine aufwändigere oder mehr Raum beanspruchende Fixierung, beispielsweise eine Schraubfixierung, vermieden ist. Dies ermöglicht ein schlankeres und gefälligeres Design des Hörinstruments. Darüber hinaus kann eine Konstruktion aus mehreren Materialien, beispielsweise Traghaken aus Kunststoff und Schraubgewinde aus Metall, vermieden werden. Durch ein Design auf der Basis eines einzigen Materials wird die Herstellung und Konstruktion vereinfacht und weniger aufwändig. Zusätzlich ermöglicht die Fixierung mittels Clip und Nuten auch einen freier wählbaren Rotationswinkel zwischen Traghaken und Gehäuse; falls gewünscht können die Nuten so gestaltet sein, dass entweder keine, oder eine begrenzte, oder eine unbegrenzte Rotation des fixierten Traghakens ermöglicht ist.

Eine vorteilhafte Weiterbildung des Grundgedankens besteht darin, dass der Traghaken einen Stecker und das Gehäuse eine Buchse aufweist, die ineinandergesteckt sind, und wobei die jeweiligen Nuten an dem Stecker sowie in der Buchse angeordnet sind. Mit Stecker und Buchse ist eine einfache und gut beherrschbare, mechanisch stabile Verbindung zwischen Traghaken und Gehäuse gegeben. Zudem ist eine Stecker-Buchse-Verbindung in besonders einfacher und stabiler Weise durch ein System von Nuten und Clip fixierbar. Indem die Nuten nicht-parallel, vorzugsweise quer zur Einsteckrichtung orientiert sind, wird eine besonders hohe mechanische Stabilität gegen ein unbeabsichtigtes Lösen der Steckverbindung mit einem gleichwohl kleinen und einfachen Clip erreicht.

Eine weitere vorteilhafte Weiterbildung des Grundgedankens besteht darin, dass der Clip vollständig innerhalb des Gehäuses angeordnet ist. Dadurch wird zum einen zusätzliche Gehäuse-Öffnung für den Clip vermieden, was ein dichteres und gefälligeres Gehäuse-Design ermöglicht. Zum anderen ist der Clip dadurch gegen unbeabsichtigte Manipulation oder gegen unbeabsichtigtes Verlieren geschützt, da er erst zugänglich ist, wenn das Gehäuse geöffnet wird. Weiter kann der Clip, indem er in geeigneter Weise vollständig innerhalb des Gehäuses angeordnet ist, durch das Gehäuse in seiner Position gesichert werden, was eine besonders zuverlässige Fixierung ergibt. Zusätzlich kann der Clip aufgrund seiner Form und Elastizität selbst-fixierend gestaltet sein, was insbesondere die Montage erleichtert, da der Clip so, einmal montiert, selbsttätig in der Montageposition gehalten wird. Auf die zusätzliche selbst-fixierende Wirkung des Clips kann aber je nach Anforderung aufgrund der Gehäuse-Fixierung auch verzichtet werden.

Eine weitere vorteilhafte Weiterbildung des Grundgedankens besteht darin, dass in dem Gehäuse ein zweiteiliges Steckergehäuse vorgesehen ist, dessen Steckergehäusehälften miteinander und mit dem Gehäuse formschlüssig verbunden sind. Durch die gegenseitige formschlüssige Verbindung wird eine unaufwändige Montage ermöglicht. Zudem ist die derart gebildete Vorrichtung, falls angesichts der formschlüssigen Verbindungstechnik auf Klebstoffe und sonstige Befestigungsmittel verzichtet wird, jederzeit unaufwändig lösbar und wieder herstellbar, beispielsweise zu Wartungszwecken.

Eine weitere vorteilhafte Weiterbildung des Grundgedankens besteht darin, dass die Nut auf Seite des Gehäuses in dem Steckergehäuse angeordnet ist. Damit kann vorteilhafterweise das Steckergehäuse individuell an die Anforderungen der Steck-Clip-Verbindung angepasst werden, während das restliche Gehäuse des Hörinstruments unabhängig davon und in Entsprechung anderer Anforderungen gestaltet werden kann.

Eine weitere vorteilhafte Weiterbildung des Grundgedankens besteht darin, dass Eine weitere vorteilhafte Weiterbildung des Grundgedankens besteht darin, dass der Clip vollständig innerhalb des Steckergehäuses angeordnet ist. Hierdurch bildet das Steckergehäuse eine innerhalb des Hörinstrumentgehäuses vollständige und abgeschlossene Einheit. Weiter wird der Clip durch das Steckergehäuse abgedeckt, sodass eine ungewollte mechanische oder elektrische Wechselwirkung mit weiteren Hörinstrumentkomponenten ausgeschlossen ist.

Eine weitere vorteilhafte Weiterbildung des Grundgedankens besteht darin, dass ein Verbindungsstück vorgesehen ist, in das der Stecker hineingesteckt ist, und das im Steckergehäuse gelagert ist.

Ein weiterer Grundgedanke der Erfindung besteht in einem Traghaken für ein Hörinstrument, das wie vorangehend erläutert ausgeführt ist, wobei der Traghaken mit dem Gehäuse des Hörinstruments durch eine Steckverbindung verbindbar ist, und wobei am Traghaken eine Nut vorgesehen ist, die dazu ausgebildet ist, einen Clip zum Fixieren der Steckverbindung aufzunehmen, und dass die Nut nicht-parallel zur Steckrichtung der Steckverbindung orientiert und so angeordnet ist, dass sie bei vollständig ineinandergestecktem Traghaken und Gehäuse mit einer entsprechenden Nut im Gehäuse fluchtet.

Eine weitere vorteilhafte Weiterbildung des Grundgedankens besteht darin, dass der Traghaken einen Stecker zum Einstecken in das Gehäuse aufweist, und wobei die Nut an dem Stecker angeordnet ist.

Ein weiterer Grundgedanke der Erfindung besteht in einem Gehäuse für ein Hörinstrument, das wie vorangehend erläutert ausgeführt ist, wobei das Gehäuse mit dem Traghaken des Hörinstruments durch eine Steckverbindung miteinander verbindbar ist, und wobei im Gehäuse eine Nut vorgesehen ist, die dazu ausgebildet ist, einen Clip zum Fixieren der Steckverbindung aufzunehmen, und wobei die Nut nicht-parallel zur Steckrichtung der Steckverbindung orientiert und so angeordnet ist, dass sie bei vollständig ineinandergestecktem Traghaken und Gehäuse mit einer entsprechenden Nut am Traghaken fluchtet. Eine vorteilhafte Weiterbildung des Grundgedankens besteht darin, dass das Gehäuse eine Buchse zum Einstecken des Traghakens aufweist, und wobei die Nut in der Buchse angeordnet ist.

Eine weitere vorteilhafte Weiterbildung des Grundgedankens besteht darin, dass in dem Gehäuse ein zweiteiliges Steckergehäuse vorgesehen ist, dessen Steckergehäusehälften miteinander und mit dem Gehäuse formschlüssig verbunden sind. Durch die gegenseitige formschlüssige Verbindung wird eine unaufwändige Montage ermöglicht. Zudem ist die derart gebildete Vorrichtung, falls angesichts der formschlüssigen Verbindungstechnik auf Klebstoffe und sonstige Befestigungsmittel verzichtet wird, jederzeit unaufwändig lösbar und wieder herstellbar, beispielsweise zu Wartungszwecken.

Eine weitere vorteilhafte Weiterbildung des Grundgedankens besteht darin, dass die Nut auf seiten des Gehäuses in dem Steckergehäuse angeordnet ist. Damit kann vorteilhafterweise das Steckergehäuse individuell an die Anforderungen der Steck-Clip-Verbindung angepasst werden, während das restliche Gehäuse des Hörinstruments unabhängig davon und in Entsprechung anderer Anforderungen gestaltet werden kann.

Eine weitere vorteilhafte Weiterbildung des Grundgedankens besteht darin, dass ein Verbindungsstück zum Einstecken des Traghakens vorgesehen ist, das im Steckergehäuse gelagert ist.

Weitere vorteilhafte Ausgestaltungen ergeben sich aus den abhängigen Patentansprüchen sowie aus der nachfolgenden Beschreibung von Ausführungsbeispielen anhand von Figuren. Die Figuren zeigen:
- Fig 1: HDO-Höristrument schematisch dargestellt
- Fig 2: Ausführungsform der Befestigung des Traghakens
- Fig 3: Abschnitt des Traghakens
- Fig 4: Obere Steckergehäusehälfte

- Fig 5: Hörinstrumentgehäuse in vergrößerter Draufsicht
- Fig 6: Verbindungsstück schematisch dargestellt
- Fig 7: Clip
- Fig 8: Abschnitt des Receivers schematisch dargestellt
- Fig 9: Abschnitt Hörinstrumentgehäuse
- Fig 10: Schnittdarstellung des Hörinstrumentgehäuses
- Fig 11: Weitere Ausführungsform

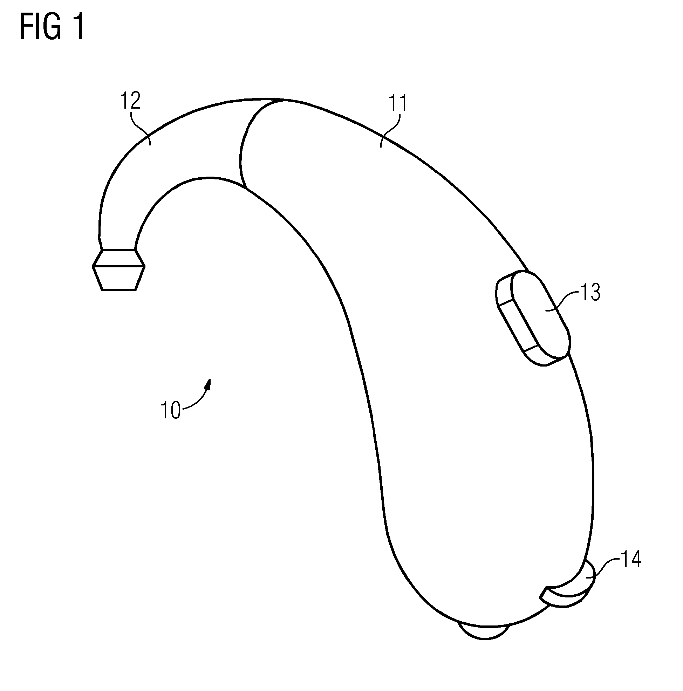

**In** **Fig 1** ist ein HDO-Hörinstrument schematisch perspektivisch dargestellt. Es umfasst ein Gehäuse 11, in dem die elektronischen Komponenten des Hörinstruments, beispielsweise Mikrophon, Signalverarbeitungseinheit, Receiver und Batterie angeordnet sind. Das Gehäuse 11 ist mit einem Traghaken 12 verbunden, der zum einen dazu dient, das Gehäuse hinter dem Ohr des Benutzers einhängen und tragen zu können, und der zum anderen als Anschluss für ein Tube (Hörschlauch) dient. Ein Bedienelement 13, das als Druck-, Wipp-Schalter oder Drehrad ausgeführt sein kann, dient dazu Nutzereingaben zu ermöglichen, die beispielsweise dem Ein-/Aus-Schalten oder dem Verstellen von Betriebsparametern des Hörinstruments 10 gelten. Am unten dargestellten Ende des Gehäuses 11 ist ein Batteriefach 14 angeordnet, das in der Abbildung lediglich teilweise erkennbar ist.

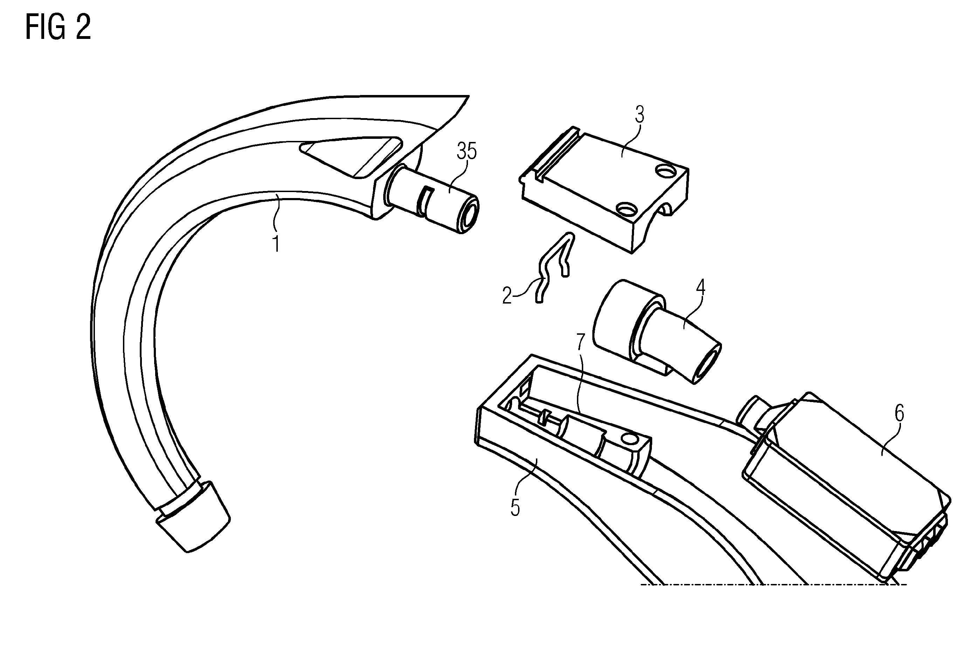

**In** **Fig 2** ist eine Ausführungsform der Befestigung des Traghakens 1 am Gehäuse 5 eines Hörinstruments gemäß der Erfindung schematisch als Sprengzeichnung dargestellt. Der Traghaken 1 weist einen Stecker 35 auf. Der Stecker 35 wird durch eine entsprechende Öffnung des Gehäuses 5, beziehungsweise der in der Abbildung allein dargestellten unteren Gehäusehälfte 5 in das Gehäuse 5 eingesteckt. Im Gehäuse 5 ist ein Verbindungsstück 4 dafür vorgesehen, den Stecker 35 aufzunehmen. Das Verbindungsstück 4 ist aus flexiblem Material mit zumindest im Einsteckbereich glatten Oberflächen gefertigt, so dass sich zwischen Stecker 35 und Verbindungsstück 4 eine Dichtung ergibt. Von der anderen Seite ist ein Receiver 6 ebenfalls in das Verbindungsstück 4 eingesteckt, wobei in vergleichbarer Weise eine Dichtung zwischen dem Receiver 6 und dem Verbindungsstück 4 hergestellt wird. Mithin verbindet das Verbindungsstück 4 dicht, insbesondere schalldicht, den Receiver 6 mit dem Traghaken 1.

Das Verbindungsstück 4 wird in eine korrespondierend ausgeformte Öffnung der Steckergehäusehälfte 7 eingelegt, wobei die Steckergehäusehälfte 7 in das Gehäuse 5 eingelegt ist. Sobald das Verbindungsstück 4 in die Steckergehäusehälfte 7 eingelegt und der Stecker 35 und der Receiver 6 eingesteckt sind, wird der Clip 2 installiert und sodann die Steckergehäusehälfte 3 aufgesetzt. Zum Vervollständigen des Hörinstrumentgehäuses wird anschließend die nicht dargestellte obere Gehäusehälfte des Hörinstruments aufgesetzt.

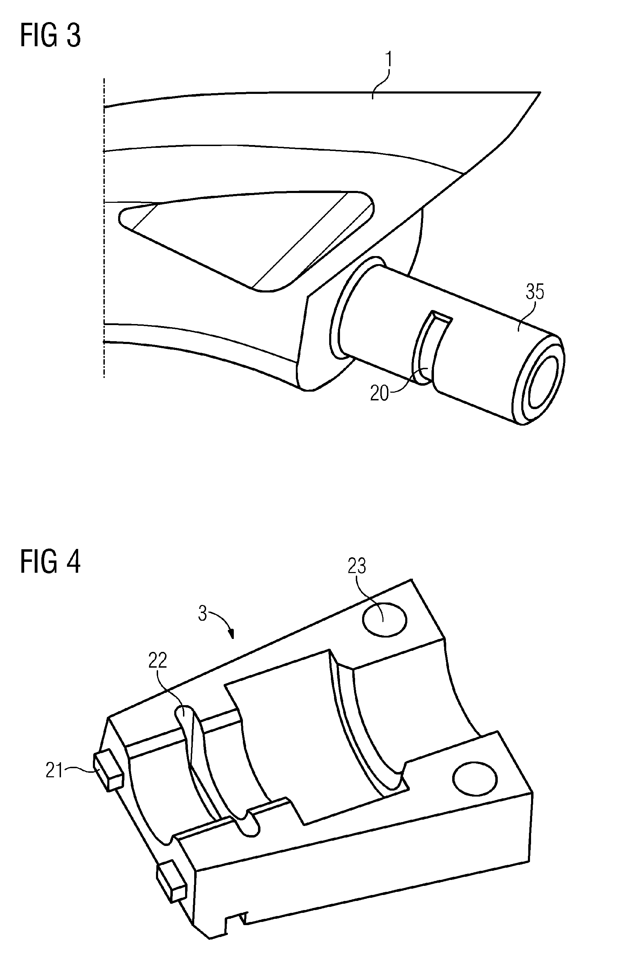

**In** **Fig 3** ist ein Abschnitt des Traghakens 1 vergrößert dargestellt, an dem der Stecker 35 angeordnet ist. Der Stecker 35 umfasst eine Nut 20, die zur Aufnahme des vorangehend dargestellten Clips dient. Sobald der Clip in die Nut 20 eingreift, kann dadurch eine Bewegung des Steckers 35 in axialer Richtung blockiert werden. Daher ist die Nut 20 in einer Orientierung quer zur axialen Einsteckrichtung des Steckers 35 ausgerichtet. Um eine axiale Bewegung des Steckers 35 zu blockieren, ist es grundsätzlich ausreichend, wenn die Nut 20 nicht axialer Richtung orientiert ist. Es liegt jedoch auf der Hand, dass sich eine besonders stabile Blockierung dann ergibt, wenn die Nut 20, wie in der dargestellten Ausführungsform, senkrecht oder nahezu senkrecht zur axialen Richtung orientiert ist.

**In** **Fig 4** ist die obere Gehäusehälfte 3 vergrößert dargestellt, die in der vorangehenden Figur von oben auf die untere Steckergehäusehälfte 7 aufgesetzt wird. Die Steckergehäusehälfte 3 weist je zwei Nasen 21 und 23 auf, die der formschlüssigen Arretierung der Steckergehäusehälfte dienen. Die Funktionsweise der Nasen 21 und 23 wird in der nachfolgenden Figurenbeschreibung erläutert. Eine Nut 22 dient der Aufnahme des vorangehend erläuterten Clips. Die Nut 22 ist, insoweit korrespondierend zur vorangehend erläuterten Nut 20 des Steckers 35, senkrecht zur axialen Einsteckrichtung in die Steckergehäusehälfte 3 beziehungsweise das daraus gebildete Steckergehäuse orientiert.

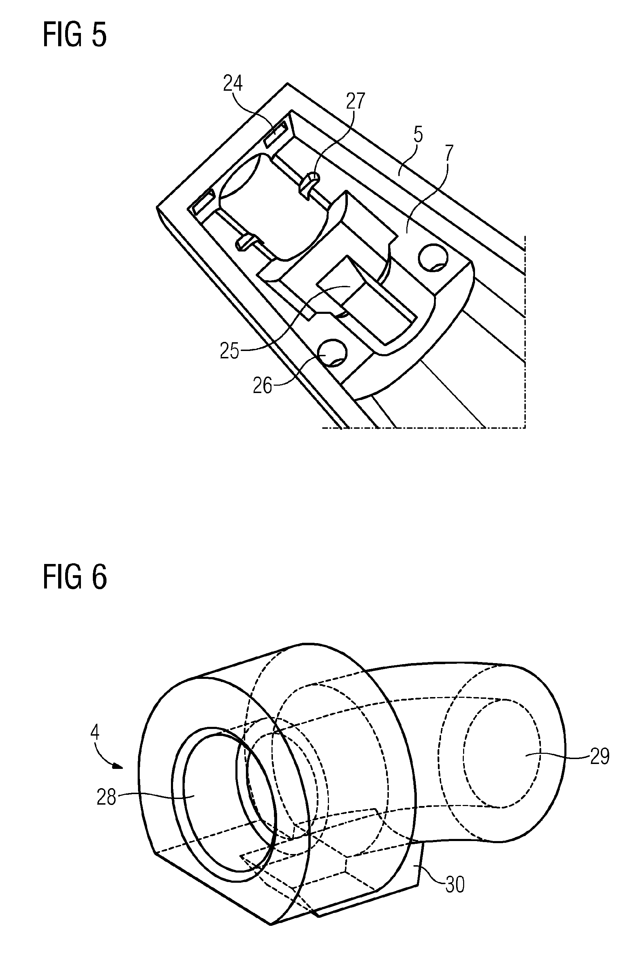

**In** **Fig 5** ist das Gehäuse 5 in vergrößerter Draufsicht dargestellt. An der Stirnseite des Gehäuses 5 sind im Inneren Aufnahmen 24 angeordnet. Die Aufnahmen 24 sind als Vertiefungen ausgebildet, die dem Aufnehmen der vorangehend beschriebenen Nasen 21 der Steckergehäusehälfte 3 dienen. In der Steckergehäusehälfte 7 sind weiter Aufnahmen 26 erkennbar. Diese dienen dem Aufnehmen der vorangehend erläuterten Nasen 23. Es wird erkennbar, dass die Aufnahmen 24 der formschlüssigen Arretierung der Gehäusehälfte 3 mittels der Nasen 21 dienen und eine Bewegung nach oben von der unteren Steckergehäusehälfte 7 weg verhindern. In vergleichbarer Weise verhindern die Aufnahmen 26 in Wechselwirkung mit den Nasen 23 eine Bewegung der oberen Steckergehäusehälfte 3 parallel zur unteren Steckergehäusehälfte 7. Auf diese Weise dienen die Aufnahmen 24, 26 der formschlüssigen Arretierung der Steckergehäusehälften 3 und 7.

Die in der Figur dargestellte Steckergehäusehälfte 7 kann im Gehäuse 5 ebenfalls eingelegt und in vergleichbarer Weise formschlüssig arretiert sein. Alternativ kann sie im Gehäuse durch Schrauben, Stifte, Schweißen oder Kleben befestigt sein. Eine weitere Alternative besteht darin, dass die untere Steckergehäusehälfte 7 in das Gehäuse 5 integral und einstückig mit eingeformt ist, also kein separates Bauteil ist.

Die untere Steckergehäusehälfte 7 weist weiter eine Nut 27 auf, die der Aufnahme des vorangehend erläuterten Clips dient. Die Nut 27 besteht lediglich in kurzen Vertiefungen, die die Endbereiche des Clips aufnehmen sollen. Weiter ist in der Steckergehäusehälfte 7 eine Aussparung 25 erkennbar, die dem Arretieren des vorangehend erläuterten Verbindungsstücks dient.

**In** **Fig 6** ist das Verbindungsstück 4 vergrößert schematisch dargestellt. Es weist einen Stutzen 28 auf, in den der vorangehend erläuterte Stecker des Traghakens eingesteckt wird. Auf seiner gegenüberliegenden Seite ist ein Stutzen 29 zum Einstecken des Receivers vorgesehen. Eine Führung 30 ist korrespondierend zur vorangehend erläuterten Aussparung der unteren Steckergehäusehälfte geformt. Sie wird in die besagte Aussparung eingelegt, um das Verbindungsstück 4 in der Steckergehäusehälfte zu arretieren. Da erkennbar durch die Form des Verbindungsstücks 4 und des Steckergehäuses eine axiale Bewegung des Verbindungsstücks 4 im Steckergehäuse nicht möglich ist, dient die Führung 30 vor allem dazu, eine unerwünschte Rotation des Verbindungsstücks 4 im Steckergehäuse zu unterbinden.

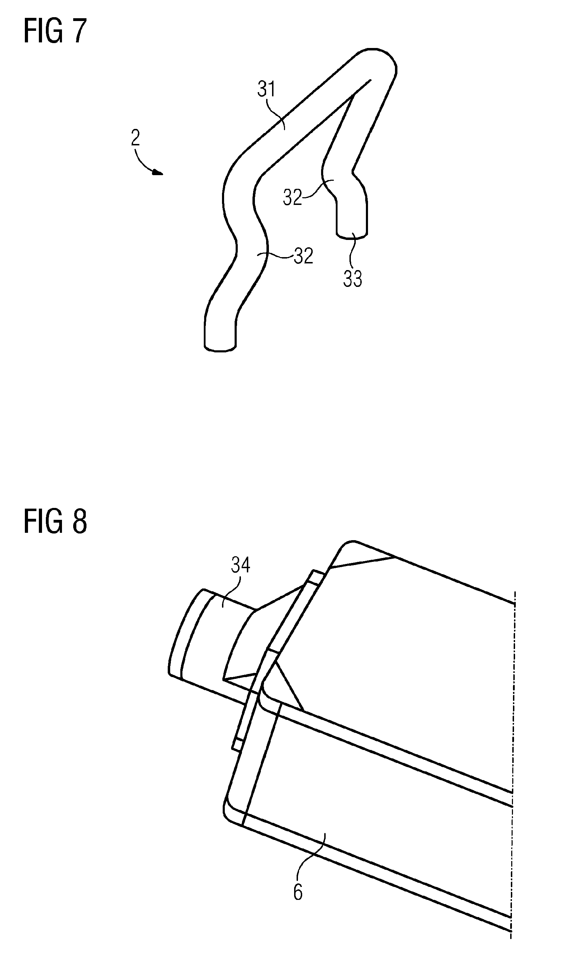

**In** **Fig 7** ist der Clip 2 vergrößert perspektivisch dargestellt. Er weist einen Rückratabschnitt 31 auf, sowie zwei Klammerabschnitte 32 und zwei Endabschnitte 33. Die Funktion der einzelnen Abschnitte des Clips 2 wird in der nachfolgenden Figurenbeschreibung erläutert.

**In** **Fig 8** ist ein Abschnitt des Receivers 6 vergrößert dargestellt, an den der Schallstutzen 34 angebracht ist. Mit dem Schallstutzen 34 wird der Receiver 6 in das vorangehend erläuterte Verbindungsstück eingesteckt.

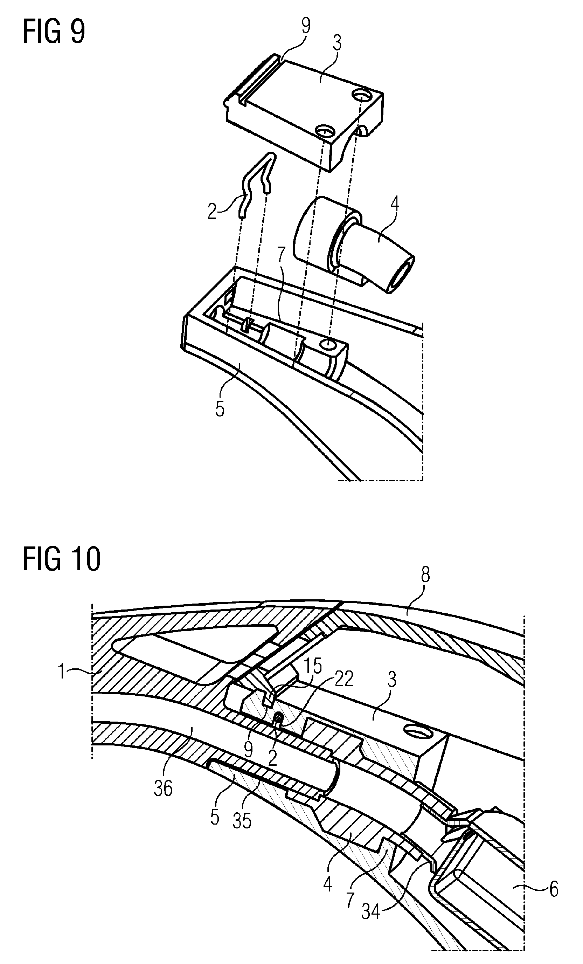

**In** **Fig 9** ist das Gehäuse 5 samt Steckergehäusehälften 3 und 7 sowie Clip 2 und Verbindungsstück 4, jedoch ohne Traghaken und Receiver, dargestellt. Es wird erkennbar, dass der Clip 2 und das Verbindungsstück 4 axial hintereinander angeordnet sind. Weiter wird erkennbar, dass die Endabschnitte des Clips 2 in korrespondierende Nuten der Steckergehäusehälfte 7 eingeführt werden, um den Clip zu installieren. Die obere Steckergehäusehälfte 3 weist eine in der Abbildung nicht erkennbare innenseitige Nut 22 auf, in die der Rückratabschnitt des Clips 2 eingeführt ist, sobald die Steckergehäusehälfte 3 auf der gegenüberliegenden Steckergehäusehälfte 7 aufgesetzt ist. Weiter weist die Steckergehäusehälfte 3 eine Nut 9 auf, die ebenfalls der formschlüssigen Arretierung im Gehäuse 5 dient.

**In** **Fig 10** ist ein Ausschnitt des Gehäuses 5, 8 samt Steckergehäuse 3, 7, Verbindungsstück 4, Traghaken 1 und Receiver 6 angestellt. Das Verbindungsstück 4 ist in die untere Hälfte des Steckergehäuses 3 eingelegt. In das Verbindungsstück 4 ist der Stecker 35 des Traghakens 1 sowie der Schallstutzen 34 des Receivers 6 eingesteckt. Der Clip 2 ist installiert und die obere Steckergehäusehälfte 7 aufgesetzt. Dabei wird der Clip 2 mit seinem Rückratabschnitt in die Nut 22 eingeführt.

Die Nut 9 der Steckergehäusehälfte 7 nimmt die im Gehäuseteil 8 ausgebildete Feder 15 auf. Die Feder 15 wirkt mit Nut 9 derart zusammen, dass die Steckergehäusehälfte 7 gegen axiale Bewegung blockiert wird. Es ist erkennbar, dass die Steckergehäusehälften 3, 7 das Verbindungsstück 4 samt Clip 2 umfassen, wobei der Clip 2 vollständig innerhalb des Steckergehäuses 3, 7 angeordnet ist.

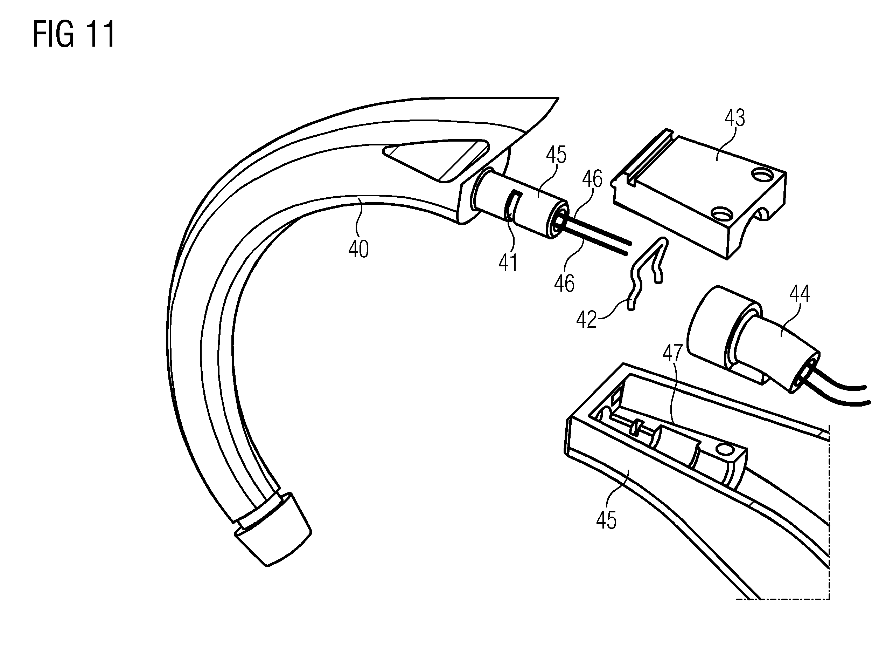

**In** **Fig 11** ist eine weitere Ausführungsform dargestellt. Der Traghaken 40 weist einen Stecker 45 auf, der mit einer Nut 41 versehen ist. Im Unterschied zur vorangehend erläuterten Ausführungsform dient der Stecker 45 jedoch nicht als akustischer Stecker für den Akustikkanal. Stattdessen ist er mit zwei elektrischen Kontakt-Pins 46 ausgestattet. Im Hörinstrumentgehäuse 45 ist die untere Steckergehäusehälfte 47 angeordnet, die vergleichbar der vorausgehend erläuterten Ausführungsform ausgebildet ist. Das Gleiche gilt für die darauf aufzusetzende obere Steckergehäusehälfte 43. Ebenso ist der Clip 42 wie vorangehend erläutert mit einem Rückgratabschnitt, zwei Klammerabschnitten sowie zwei Endabschnitten ausgeführt. Im Unterschied zur vorangehend erläuterten Ausführungsform ist das Verbindungsstück 44 jedoch nicht als akustisches Verbindungsstück ausgeführt, sondern als elektrische Buchse. In die Buchse 44 wird in der vorangehend erläuterten Weise der Stecker 45 eingesteckt, wobei die Kontakt-Pins 46 in die Buchse 44 elektrisch leitend eingesteckt werden. Die Buchse 44 dient dem Herstellen eines elektrischen Kontakts mit weiteren elektronischen Komponenten des Hörinstruments, was dadurch angedeutet ist, dass aus der Buchse 44 zwei Drähte herausgeführt sind. Alternativ dazu kann die Buchse 44 statt der Drähte Kontakt-Pads aufweisen, die in beliebiger Weise kontaktiert werden können. Als weitere Alternative kann die Buchse 44 eine flexible gedruckte Leiterbahn (PCB) als Kontaktfahne aufweisen. Weitere Möglichkeiten der elektrischen Kontaktierung der Buchse 44 seitens des Hörinstruments sind dem Fachmann ohne Weiteres geläufig.

In der vorangehend erläuterten Weise dient der Clip 42 dem Blockieren des in die Buchse 44 und das Steckergehäuse 43, 47 eingesteckten Steckers 45 des Traghakens 40. Die obere Steckergehäusehälfte 43 umschließt dabei die Buchse 44 sowie den Clip 42, wobei der Clip 42 vollständig vom Steckergehäuse eingeschlossen wird. In der vorangehend erläuterten Weise dienen Nasen, Aufnahmen, Nuten und eine Feder dazu, die Steckergehäusehälfte 43 mit der Steckergehäusehälfte 47 und dem Gehäuse 45 formschlüssig zu arretieren. Hierzu ist die weitere, nicht dargestellte obere Gehäusehälfte des Hörinstrumentgehäuses aufzusetzen.

## Patentansprüche

1. Hörinstrument (10) zum Tragen hinter dem Ohr (HdO) umfassend ein Gehäuse (5,8,11,45) und einen Traghaken (1,12,40), wobei der Traghaken (1,12,40) und das Gehäuse (5,8,11,45) durch eine Steckverbindung miteinander verbunden sind, **dadurch gekennzeichnet,**
**dass** ein Clip (2,42) dazu vorgesehen ist, die Steckverbindung zu fixieren,
**dass** jeweils am Traghaken (1,12,40) und im Gehäuse (5,8,11,45) Nuten (20,41,22,27,48) vorgesehen sind, die dazu ausgebildet sind, den Clip (2,42) aufzunehmen,
**dass** die jeweiligen Nuten (20,41,22,27,48) nicht-parallel zur Steckrichtung der Steckverbindung orientiert und so angeordnet sind, dass sie bei vollständig ineinandergestecktem Traghaken (1,12,40) und Gehäuse (5,8,11,45) miteinander fluchten, und dass der Clip (2,42) in die jeweiligen Nuten (20,41,22,27,48) gleichzeitig eingeführt ist.

2. Hörinstrument (10) nach Anspruch 1, wobei der Traghaken (1,12,40) einen Stecker (35,45) und das Gehäuse (5,8,11,45) eine Buchse aufweist, die ineinandergesteckt sind, und wobei die jeweiligen Nuten (20,41,22,27,48) an dem Stecker (35,45) sowie in der Buchse angeordnet sind.

3. Hörinstrument (10) nach einem der vorhergehenden Ansprüche, wobei der Clip (2,42) vollständig innerhalb des Gehäuses (5,8,11,45) angeordnet ist.

4. Hörinstrument (10) nach einem der vorhergehenden Ansprüche, wobei in dem Gehäuse (5,8,11,45) ein zweiteiliges Steckergehäuse vorgesehen ist, dessen Steckergehäusehälften (3,7,43,47) miteinander und mit dem Gehäuse (5,8,11,45) formschlüssig verbunden sind.

5. Hörinstrument (10) nach Anspruch 3, wobei die Nut (22,27,48) auf Seite des Gehäuses (5,8,11,45) in dem Steckergehäuse angeordnet ist.

6. Hörinstrument (10) nach einem der Ansprüche 4 oder 5, wobei der Clip (2,42) vollständig innerhalb des Steckergehäuses angeordnet ist.

7. Hörinstrument (10) nach einem der Ansprüche 4 bis 6, wobei ein Verbindungsstück (4,44) vorgesehen ist, in das der Stecker (35,45) hineingesteckt ist, und das im Steckergehäuse gelagert ist.

8. Traghaken (1,12,40) für ein Hörinstrument (10) nach einem der Ansprüche 1 bis 7, wobei der Traghaken (1,12,40) mit dem Gehäuse (5,8,11,45) des Hörinstruments (10) durch eine Steckverbindung verbindbar ist,
**dadurch gekennzeichnet,**
**dass** am Traghaken (1,12,40) eine Nut (20,41) vorgesehen ist, die dazu ausgebildet ist, einen Clip (2,42) zum Fixieren der Steckverbindung aufzunehmen,
und **dass** die Nut (20,41) nicht-parallel zur Steckrichtung der Steckverbindung orientiert und so angeordnet ist, dass sie bei vollständig ineinandergestecktem Traghaken (1,12,40) und Gehäuse (5,8,11,45) mit einer entsprechenden Nut (22,27,48) im Gehäuse (5,8,11,45) fluchtet.

9. Traghaken (1,12,40) nach Anspruch 8, wobei der Traghaken (1,12,40) einen Stecker (35,45) zum Einstecken in das Gehäuse (5,8,11,45) aufweist, und wobei die Nut (20,41) an dem Stecker (35,45) angeordnet ist.

10. Gehäuse (5,8,11,45) für ein Hörinstrument (10) nach einem der Ansprüche 1 bis 8, wobei das Gehäuse (5,8,11,45) mit dem Traghaken (1,12,40) des Hörinstruments (10) durch eine Steckverbindung miteinander verbindbar ist,
**dadurch gekennzeichnet,**
**dass** im Gehäuse (5,8,11,45) eine Nut (20,41,22,27,48) vorgesehen ist, die dazu ausgebildet ist, einen Clip (2,42) zum Fixieren der Steckverbindung aufzunehmen,
**dass** die Nut (22,27,48) nicht-parallel zur Steckrichtung der Steckverbindung orientiert und so angeordnet ist, dass sie bei vollständig ineinandergestecktem Traghaken (1,12,40) und Gehäuse (5,8,11,45) mit einer entsprechenden Nut (20,41) am Traghaken (1,12,40) fluchtet.

11. Gehäuse (5,8,11,45) nach Anspruch 10, wobei das Gehäuse (5,8,11,45) eine Buchse zum Einstecken des Traghakens (1,12,40) aufweist, und wobei die Nut (22,27,48) in der Buchse angeordnet ist.

12. Gehäuse (5,8,11,45) nach Anspruch 10 oder 11, wobei in dem Gehäuse (5,8,11,45) ein zweiteiliges Steckergehäuse vorgesehen ist, dessen Steckergehäusehälften (3,7,43,47) miteinander und mit dem Gehäuse (5,8,11,45) formschlüssig verbunden sind.

13. Gehäuse (5,8,11,45) nach Anspruch 12, wobei die Nut (22,27,48) auf seiten des Gehäuses (5,8,11,45) in dem Steckergehäuse angeordnet ist.

14. Gehäuse (5,8,11,45) nach einem der Ansprüche 12 oder 13, wobei ein Verbindungsstück (4,44) zum Einstecken des Traghakens (1,12,40) vorgesehen ist, das im Steckergehäuse gelagert ist.
